# EUROPEAN PATENT APPLICATION

(11) **EP 3 779 559 A1**
(43) Date of publication of application: **17.02.2021**
(21) Application number: 17913187.5
(22) Date of filing: 14.06.2017
(51) Int. Cl.: G02B 27/00

(54) **HEAD-MOUNTED DISPLAY, AND DISPLAY SCREEN, HEAD-MOUNTED BRACKET AND VIDEO THEREOF**

(71) Applicant: Li, Cheng, Qingdao, Shandong 266011 (CN)
(72) Inventor: Li, Cheng, Qingdao, Shandong 266011 (CN)
(74) Representative: Nobbe, Matthias
(86) International application number: PCT/CN2017/088223
(87) International publication number: WO 2018/227424

(57) **Abstract**

The invention belongs to the field of virtual reality technology, and discloses a kind of head-mounted display, and display screen, head-mounted bracket and video thereof; the concave display screen of the head-mounted display of the present invention displays a picture on a concave three-dimensional space surrounding the wearer's eyes; it has a strong sense of presence and immersion; because there is not a magnifying glass or retroreflector between the display screen and the wearer's eyes, 2D image displayed by the concave display screen or 3D image displayed on naked-eye 3D concave display screen is close to the normal observation habits of human eyes; the wearer can view it for a long time without fatigue, dizziness or eye swelling; the scene special effect device increases the sense of presence and immersion of the virtual scene, and can be widely applied in television, games and other industries.

## Description

### TECHNICAL FIELD

The invention belongs to the field of virtual reality technology, and particularly relates to a head-mounted display, and display screen, head-mounted bracket and video thereof.

### BACKGROUND ART

In the field of virtual reality technology, as a display device for a virtual scene, a head-mounted display is required to enable the wearer of the head-mounted display to produce a sense of immersion and presence in the scene; the display screen of the head-mounted display in the prior art is flat; a magnifying glass is installed between the said flat display screen and the eyes of the wearer of the head-mounted display to increase the field of view of the display to achieve immersion and presence.

### PROBLEMS TO BE SOLVED

However, the picture displayed on the said display screen enters the wearer's eyes through a magnifying glass, which causes the wearer to be dizzy and dizzy, and the wearer cannot watch for a long time.

### SUMMARY

### SOLUTIONS TO PROBLEMS

In order to solve the above problems, the technical solution adopted by the present invention is a head-mounted display, and display screen, head-mounted bracket and video thereof.

The head-mounted display includes a display screen and a head-mounted bracket, the display screen is a concave display screen, and the image display surface of the concave display screen is concave, that is, connection of any two points on the image display surface of the concave display screen is outside the display or on the surface of the display surface; the concave display screen is not a projection screen that reflects light projected by the projector.

The head-mounted display is installed with a concave display screen or an integrated concave display screen composed of more than one display module.

The head-mounted bracket fixes the concave display screen to the wearer's head, and at a position where the wearer can clearly and correctly view the image displayed by the concave display screen.

Under the proper lighting conditions, the normal human eye is the most convenient and most accustomed to observe the distance of small objects nearby; this distance is called the distance of distinct vision; the adjustment function of the human eye is not too tight at this distance, and it feels most comfortable when observing, and the wearer can observe for a long time without fatigue.

The distance of distinct vision of normal human eyes is 25 cm, the distance of distinct vision of naked eyes of people with short-sighted eyes is less than 20 cm, and the distance of distinct vision of naked eyes of people with high myopia can reach 15 cm.

In order to suit wearers with different eyesight, the distance between the display screen of the head-mounted display and the observer's eye observation point can be adjusted.

The distance between the wearer's eye observation point and the front display screen can also be fixed at a certain value, such as 22 cm (now people are generally short-sighted), and then the wearer wears his own glasses for correcting vision to clearly view displayed images and videos.

The shorter the distance between the display screen of the head-mounted display and the eye observation point of the wearer, the smaller the volume of the head-mounted display and the more comfortable it is to wear.

There is no magnifying glass or reflector between the concave display screen and the eyes of the wearer of this head-mounted display, and the wearer directly watches the picture displayed by the concave display screen with naked eyes or wearing his own vision-correcting glasses according to normal habits.

The size of the concave display screen can meet the horizontal field of view angle of the head-mounted display greater than 36° ; the horizontal field of view angle of the head-mounted display is:when the head-mounted display is worn by normal viewing, its eye observation point is connected to the middle point of the left edge and the right edge of the image display surface, and the angle formed by the two connecting lines.

When the head-mounted display displays a video, the picture is displayed on a concave three-dimensional space surrounding the wearer's eyes, which is close to the feeling of a person viewing a real scene; as the displayed scene moves from the far to the near, the viewing angle of the scene is changing; in the curved area of the concave display screen, the viewing angle difference of the same scene in the left and right eyes of the wearer increases, approaching the feeling of a person viewing real scenes; this feeling can be embodied when the said head-mounted display's horizontal field of view angle is greater than 36° ; the larger the horizontal field of view angle is, the more obvious the sense of immersion and presence will be; the concave display with a large field of view angle can be used to improve the sense of immersion and presence of the display scene.

The said picture refers to that part of each image or each frame of video displayed on the display screen.

When the horizontal field of view angle of the said head-mounted display is greater than 36° , even if the vertical field of view angle is only a few degrees, as long as the displayed picture can be clearly seen, through the display of the curved area of the said concave display screen, the viewing angle difference of the same scene in the left and right eyes of the wearer increases and the wearer will also have a sense of immersion and presence, just like looking at the outside scene from a slit curved horizontally around the eye; when the vertical field of view angle of the said head-mounted display is greater than 20° , the sense of immersion and presence can be further increased.

The vertical field of view angle of the head-mounted display is:when the head-mounted display is worn by normal viewing, its eye observation point is connected to the middle point of the upper edge and the lower edge of the image display surface, and the angle formed by the two connecting lines.

The pixel of the said concave display screen can be controlled by an electric signal to realize electroluminescence; for example, the pixel of the said concave display screen emits light by using organic materials through the role of electricity, such as an OLED display screen or a PLED display screen; the said concave display screen may impose a signal voltage to the pixel with a scan line (row line) and a data line (column line) to control the pixel light emission, such as a PMOLED display screen.

With the head-mounted display of this solution, the picture displayed seen by the wearer is a two-dimensional picture.

Normal human eyes will not be dizzy when watching a two-dimensional picture, and watching a video for about two hours will not easily cause eye fatigue; when people watch a game or movie for about two hours, their eyes will not feel uncomfortable.

The overlapping viewing angle of human eyes is 124° , and a scene smaller than this view angle will produce a three-dimensional feeling; the limit horizontal field of view angle of human eyes is 230° ; when the horizontal field of view angle of the display screen of the head-mounted display is greater than 230° , the wearer cannot see the left and right edges of the display screen, and the wearer will feel like in the scene displayed by the display screen.

Within the visible range of human eyes, the viewing angle less than 10° from the center of the field of vision is the sensitive area where human eyes have the strongest ability to discern the details or colors of the scene viewed; when the viewing angle is within 30° horizontally (15° left and right respectively in the center of the field of view) and 20° vertically (8° above and 12° below the center of the field of vision), the human eyes can focus and recognize scenery information only by easily turning the eyeball in normal habits, and this viewing area is called the effective field of view; when the viewing angle is between 30° to 100° horizontally (50° left and right respectively in the center of the field of view), and 20° to 85° vertically (35° above and 50° below the center of the field of view), the human eye can only determine the presence and The location of the scene, and this viewing area is called the sensing field of view; when the viewing angle is between 100° to 200° horizontally (100° left and right respectively in the center of the field of view) and 85° to 135° vertically (50° above and 85° below the center of the field of vision), only strong stimuli can induce gaze action, and this viewing area is called the auxiliary field of view.

Therefore, the image and information in the display screen area in the said effective field of view of the human eye should be of high resolution and fine.

Since the said head-mounted display is fixed on the wearer's head, directly in front of the wearer's eyes, the position of the said effective field of view of the wearer's eyes on the said concave display screen is also fixed.

The said sensing field of view and the auxiliary field of view of the human eye, that is, the remaining light area outside the effective field of vision of the human eye, is the area where the human eye cannot see the scene clearly, but the remaining light area of the human eye can increase the sense of immersion and presence of the display scene space.

In the display screen area outside the effective field of view of the human eye, especially the display screen area of the auxiliary field of view, the distance from the eye cannot be considered, because it is indistinguishable regardless of the distance.

In order to increase the angle of view of the said head-mounted display and reduce its volume as much as possible, the portion of the display screen outside the effective field of view of the human eye, especially the display screen area of the said auxiliary field of vision, should be curved toward this area as much as possible, and the wearer's field of view is embraced with the smallest possible display screen.

In the display area in the human's sensing field of view and auxiliary field of view, the resolution can be reduced, which can reduce the processing difficulty of the display screen, reduce the data processing volume of the display drive circuit, reduce the requirements for the drive circuit and reduce costs.

As the concave display screen of the head-mounted display, there are many shapes of image display surfaces, which can be a concave surface without polygonal point or polygonal line, such as a partial paraboloid (a local area of the internal surface of the parabola including a vertex of the paraboloid), a partially internal spherical surface (a local area of the internal surface of a sphere), partial internal ellipsoidal surface (a local area of the internal surface of an ellipsoidal surface), local internal flat spherical surface (a local area of the internal surface of a flat spherical surface), partial internal double-centered spherical surface (a local area the internal surface of the geometric body formed by tangent cylindrical surfaces of equal diameter between two opposite hemispherical surfaces with a concave surface); or a concave surface formed by bending the left and right sides of a flat display screen toward the image display side of this display screen; for example, by bending the flat display screen left and right toward its image display side to bend into a partially internal cylindrical surface (a local area of the internal surface of the cylindrical surface) , or a concave surface formed by bending the left and right sides of the flat display screen toward the display side of the display screen, and at least one corner of the display screen is also bent toward the image display side of the corner portion; the concave surface may be a concave surface with a polygonal point or polygonal line, such as an internal surface of a polyhedron, an internal surface of a circular table, an internal surface of a cone, and the like.

If concave display screens of these shapes display images and videos suitable for their shape, the wearer will have a sense of presence and immersion when the horizontal field of view angle is greater than 36° .

However, due to the different shapes of these concave display screens, the display direction of each display area of the display screen is different, and the required image and video shooting directions are different when shooting. In order not to distort, each display screen should have an image video suitable for its shape, however, this is not conducive to widespread use or industrial production.

For the same concave display screen, if the position of the eye observation point is different, the displayed image and video display effect will also be different.

The optimal position of the observation points of the wearer's eyes in the said head-mounted display is determined by the shape of the concave display screen.

For the concave display screen with the partially internal spherical surface (that is, the shape of the image display surface of the concave display screen is a partial area of the internal surface of the spherical surface), the optimal position of the eye observation point should be: the midpoint of the line connecting the observation points of the wearer's eyes, at the spherical center, the radius of the said spherical is equal to the distance of distinct vision, and the eyes of the wearer are symmetrical to the left-right symmetry plane of the image display surface of the concave display screen with the partially internal spherical surface.

For the concave display screen with the partial paraboloid (that is, the shape of the image display surface of the concave display screen is a partial area on the internal surface of the paraboloid surface including the paraboloid vertex), the optimal position of the eye observation point should be: the midpoint of the line connecting the observation points of the wearer's eyes, at the focal point of the paraboloid surface of the concave display screen, the distance from the said parabolic focus to the paraboloid vertex is equal to the distance of distinct vision, and the eyes of the wearer are symmetrical to the left-right symmetry plane of the image display surface of the concave display screen with the partial paraboloid surface.

For the concave display screen with the partially internal cylindrical surface (that is, the shape of the image display surface of the said concave display screen is a partial area of the internal surface of the cylindrical surface), the optimal position of the eye observation point should be: the midpoint of the line connecting the observation points of the wearer's eyes, at the midpoint of the cylindrical axis of the cylindrical surface, the radius of the cylindrical surface is equal to the distance of distinct vision, and the eyes of the wearer are symmetrical to the left-right symmetry plane of the image display surface of the concave display screen with the partially internal cylindrical surface.

At present, as the virtual reality technology is in its infancy, there is no specific definition of the images and videos used in virtual reality, generally, there are fisheye image videos, internal cylindrical surface image videos and internal spherical surface panoramic image videos.

The fisheye image video is an image video captured by a fisheye lens camera, and is an image video that is directly output without being corrected by software after projecting a scene with a viewing angle of about 180° on a flat photosensitive chip; the pixel array of the photosensitive chip is a matrix arrangement of row pixels and column pixels; when the said fisheye image video is displayed on a flat display screen by ordinary two-dimensional video playback software, the picture with barrel distortion is presented, that is, the middle of the horizontal line in the upper half of the picture is convex upward and the middle of the horizontal line of the lower half is convex downward, the middle of the vertical line of the left half is convex to the left, and the middle of the vertical line of the right half is convex to the right; however, when this fisheye image video is displayed on the said the concave display screen with the partial paraboloid or the said concave display screen with the partially internal spherical surface with a large field of view angle by using suitable video playback software or ordinary two-dimensional video playback software, it is as if it is displayed on a flat display screen; you only need to adjust the size of the picture displayed, which is suitable for the concave shape of the image display surface of the said concave display screen, and then the picture will be close to the original appearance of the scene, and the presence and immersion will be strong; the pixel array structure of the said concave display screen with the partial paraboloid and the said concave display screen with the partially internal spherical surface used here is that the row pixels are on the intersection of the concave surface of the display screen and a horizontal plane parallel to the geometric axis of this concave surface, and the column pixels are on the intersection of the concave surface of the display screen and a vertical plane parallel to the geometric axis of the concave surface; that is, in the front view of the pixel array structure of the said concave display screen with the partially internal spherical surface, the row pixels are horizontal lines and column pixels are vertical lines; in the top view of its pixel array structure, the row pixels are parallel circular arcs of concentric circles, and the column pixels are vertical lines; in the side view of the pixel array structure, the row pixels are horizontal lines, and the column pixels are parallel circular arcs of concentric circles.

The front view of the said pixel array structure refers to the view of the pixel array as seen by the said wearer in the direction of viewing the display screen image.

In the pixel array structure of the said concave display screen, the row pixels are close to the length of the corresponding scan line, and the column pixels are close to the length of the corresponding data line.

The said internal cylindrical surface image video is shot by multiple lenses of a camera in a circle at the same time and produced by using image stitching and synthesis software; when the said internal cylindrical surface image video is displayed on a flat display screen, in the picture, the middle of the horizontal line of the upper half is convex upward, the middle of the horizontal line of the lower half is convex downward, and the vertical line is not deformed; when this kind of internal cylindrical surface image video is displayed on the said concave display screen with the partially internal cylindrical surface with a large field of view angle by using appropriate video play software or ordinary two-dimensional video play software, it is as if it is displayed on a flat display screen, just one part of a frame image of the internal cylindrical surface image videos is displayed on a concave display screen with the partially internal cylindrical surface, you only need to adjust the size of the picture displayed to fit the shape of the concave shape of the image display surface of the said concave display screen, then the picture will be close to the original appearance of the scene, and the presence and immersion will be strong; you can use the mouse or the keyboard or the gyroscope to move the picture to achieve the change of the picture angle; In the front view of the pixel array structure of the said concave display screen with the partially internal cylindrical surface, row pixels are horizontal lines and column pixels are vertical lines; in the top view, the row pixels are a circular arc, and the column pixels are points on the circular arc.; in the side view, the row pixels are horizontal lines and the column pixels are vertical lines; since the concave display screen with the partially internal cylindrical surface is made by bending left and right sides of the flat display screen toward its image display side into a partially internal cylindrical surface, the pixel circuit of the display screen is the same as that of the flat display screen.

The said internal spherical surface panoramic image video is shot by at least two lenses of one camera at the same time and produced by using image stitching and synthesis software and / or three-dimensional software; when the said internal spherical surface panoramic image video is displayed on a flat display screen with an ordinary two-dimensional video play software, in the picture, the middle of the horizontal line of the upper half is convex upward, and the middle of the horizontal line of the lower half is convex downward; the vertical line is not deformed; when this kind of internal spherical surface panoramic image video is displayed on the said concave display screen with the partially internal spherical surface with a large field of view by using appropriate video play software or ordinary two-dimensional video play software, just like normal play on a flat display screen, you only need to adjust the size of the picture displayed to fit the shape of the partially internal spherical surface shape of the concave display screen; only a part of a frame image of the internal spherical surface panoramic image video is displayed on the said concave display screen with the partially internal spherical surface, and then the picture will be close to the original appearance of the scene, and the sense of presence and immersion is strong; you can use the mouse or the keyboard or the gyroscope to move the picture to achieve the conversion of the picture angle; the pixel array structure of the said concave display screen with the partially internal spherical surface used here is like the arrangement of the latitude lines and longitude lines of the globe, the row pixels are like the latitude lines of the globe and the column pixels are like the longitude lines of the globe; because the area of the upper and lower sides of the internal spherical surface gradually narrows, the column pixels also gradually shortened according to a certain rule on the upper and lower sides of the internal spherical surface of the concave display screen; the column pixels on the upper and lower sides of the internal spherical surface of the display screen gradually move closer, the upper and lower sides of the displayed picture gradually shrink to become the internal spherical surface picture of an actual structure.

If the internal spherical surface panoramic image video is displayed on a concave display screen with the partially internal cylindrical surface with a narrow upper and lower sides and long left and right sides by playing it with suitable play software or panoramic video play software, and the length of the row pixel display area of the image display surface of the concave display screen with the partially internal cylindrical surface is greater than 2.5 times the length of the column pixel display area, there will also be a better sense of presence.

The arrangement of the pixel array of the said concave display screen should avoid the distortion and deformation of the displayed image and video picture as possible.

The current virtual reality video play software is to map the picture of the said internal spherical surface panoramic image video on the internal spherical surface, and through dual-screen display or half-screen display of a single display screen, only a small part of the image of each frame of the internal spherical surface panoramic image video is displayed; by virtue of a magnifying glass to magnify this small part of the picture, a large field of view that can produce a sense of presence can be presented; the wearer can turn his head and use a gyroscope to change the scene picture of different perspectives, but the picture displayed in this way is not a large area of a panoramic image, and the field of view is not wide as well; the current virtual reality video play software also has a single-screen display mode, which uses a flat computer display screen or mobile phone display screen to display a partial area of the panoramic image video picture, and dragging the screen with the mouse or touch screen, or using the gyroscope function, the user can change the viewing angle to view different areas of the panoramic image; when the panoramic image is reduced, that is, when viewing at a large viewing angle, the picture will have obvious barrel distortion.

In fact, the barrel distortion is a true manifestation of viewing scenes from a large viewing angle, and its images become large in the near place and small in the far place, which presents the sense of presence and immersion, but such an effect cannot be expressed by flat display screens; for the said concave display screen of the partially internal spherical surface, a large part of each frame of the said internal spherical surface panoramic image video can be displayed on the partially internal spherical surface of an actual structure, and the image video surrounds spatially the wearer's eyes, as if the real scene seen by the wearer is around himself.

The said concave display screen with the partially internal spherical surface , the said concave display screen with the partially internal cylindrical surface and the said concave display screen with the partial paraboloid can be made into a concave display with a large field of view angle which displays two-dimensional pictures, and the wearer can observe for a long time without fatigue.

For the pixel array circuit of the concave display screen, due to the concave structure of the display screen, the scan lines (row pixels) or the data lines (column pixels), some are long and some are short, so the interface of the scan line electrode (row electrode) and the row driver circuit, and the interface of the data line electrode (column electrode) and the column driver circuit cannot be placed on the outer edge of the pixel array at the same time; the easier solution is to put the data lines (column lines) on the outermost layer on the back of the display screen when manufacturing the display screen; or at the outermost layer, can be connected to data lines (column lines);all the data line electrodes (column electrodes) can be drawn out in the middle of the data line(column line)to connect to the corresponding column driver circuit; the scan line electrodes (row electrodes) are connected to the corresponding row driver circuit at the left and right edges of the pixel array.

It is also possible to put the scan lines (row lines) on the outermost layer on the back of the display screen when manufacturing the display screen; or at the outermost layer, can be connected to scan lines (row lines);all the scan line electrodes (row electrodes) can be drawn out in the middle of the scan lines (row line) to connect to the corresponding row driver circuit; the data line electrodes (column electrodes) are connected to the corresponding column driver circuit at the upper and lower edges of the pixel array.

For the above-said interface between the scan line electrode (row electrode) and the row driver circuit, there may be more than one electrode interface point in the middle of the scan line (row line); or for the interface between the data line electrode (column electrode) and the column driver circuit, there may be more than one electrode interface point in the middle of the data line (column lines), so that the power supply voltage of the pixel circuit of the display screen can be uniform, the brightness of the display can be uniform, and the service life of the pixel circuit of the display screen will be prolonged, which is more obvious for the large-area display screen.

In order to reduce the volume of the concave display screen, the said auxiliary visual field portion of the said concave display screen should be curved toward the display side as much as possible; for the convenience of demolding, the area where the field of view of the said concave display screen with the partially internal spherical surface exceeds 170 degrees should be smoothly rounded into a partial internal conical surface or an internal cylindrical surface.

There are multiple methods for manufacturing the said concave display screen, and the first method is: as in the existing art, display screens are manufactured with a print method where an inkjet printer is used to sequentially spray the pixel circuit material of the display screen onto a substrate that supports the pixel circuit, which is characterized in that: the said substrate is in the shape of a transparent rotating body, a suitable inkjet printer is used, the substrate in the shape of a rotator rotates around its geometric rotation axis, and then the nozzle of the inkjet printer spray the pixel circuit material on the substrate by following a set stepping procedure, and then after other processes, manufacturing of the concave display screen will be finished.

The second method is: as in the existing art, display screens are manufactured with a print method where the pixel circuit material of the display screen is sequentially printed on a planar substrate supporting the pixel circuit by an inkjet printer or a printing device or a printing tool, which is characterized in that: the planar substrate used to support the pixel circuit of the display screen is a transparent plastic sheet that can meet the requirements, that is, the strength, thickness, transparency, and deformation properties of the said plastic sheet should meet the requirements of this concave display for the said plastic sheet; it is required that the printed pattern of the pixel array is a pattern after the pixel array pattern required for the concave display screen is unfolded into a plane (the said unfolding method is determined according to the deformation of the said plastic sheet); for the said plastic sheet, after the flat printing steps required for the screen is completed, the orientation is determined by the fixed frame, and then the plastic sheet is deformed by bending and / or stretching and / or shrinking and / or twisting; the display surface of the deformed display screen can also be pasted on the back of a concave transparent case with a suitable shape and fixed to a shape of the desired concave display, and then the manufacturing of the concave display is completed through other processes; the said concave transparent case should meet the requirements of strength, hardness and non-deformation of the display screen at normal temperature; the said deforming process should not damage the pixel circuit of the display screen, it can be deformed when the material of the pixel circuit of the display screen is not solidified and has extensibility, or a material with extensibility is selected, such as PEDOT: PSS conducting polymer.

Because the said substrate used for supporting the pixel circuit of the display screen is a plastic sheet, its strength and hardness are affected by temperature changes; therefore, during the printing of the pixel circuit, the said substrate should be maintained at a certain value from 0 to 10 degrees Celsius.

The third method is: as in the existing art, display screens are manufactured with a print method where the pixel circuit material of the display screen is sequentially printed on a planar substrate supporting the pixel circuit by an inkjet printer or a printing device or a printing tool, which is characterized in that: the planar substrate used for supporting the pixel circuit of the display screen is a cubic transfer film; the functions of the said cubic transfer film are similar to those of a water cubic transfer film; the pixel array pattern which is required for the concave display and should be printed on the back of the transparent concave substrate of the concave display screen is unfolded into a planar pattern (the said unfolding is determined according to the shape of the transparent concave substrate), and the back of the planar pattern is printed on the said planar cubic transfer film; the cubic transfer film carrying the reverse side of the unfolded pattern of the pixel circuit of the display screen is put into a liquid that dissolves only this cubic transfer film, and does not dissolve the material of the display pixel circuit; after the said liquid-covered transfer film is dissolved, the back of the transparent concave substrate of the concave display screen is coated with a suitable transparent adhesive, and then alignment is carried out, and the pixel circuit of the display screen on the liquid surface is pressed into the liquid to make the pixel circuit of the display screen cover the back of the transparent concave substrate of this concave display screen, and then after other processes, manufacturing of the concave display screen will be finished; the cubic transfer process is carried out when the pixel circuit material of the display screen is not solidified and has extensibility, or a material with extensibility is selected, such as PEDOT: PSS conducting polymer; if the printing material is water-based, the coating liquid must be an oily liquid that does not dissolve in water, the transfer film used is soluble in this oily liquid, and the said liquid cannot dissolve the transparent concave substrate of the concave display screen; the cubic transfer film includes a water cubic transfer film and a film that can be dissolved by other liquids and has the same function.

The back of the concave display screen should have a light weight and a high-strength and hard protective layer as its shell; at the edge of the display screen of the shell, there should be vertical ribs perpendicular to the display surface to reduce the deformation of the concave display screen, and the shell can also be bonded to the display screen to form a layer.

In order to increase the sense of immersion and prevent the ambient light around the wearer from interfering with the sight of the wearer, the head-mounted display may further include a hood which encloses the display screen of the head-mounted display and the eyes of the wearer into a space to hinder the outside light; the hood may be flexible, for example, using a shading cloth to surround the display screen of the head-mounted display and the wearer's eyes or head; the hood may also be rigid and integrated with the back protective layer of the display screen, the upper edge of the hard hood has a soft pad, which can be worn against the wearer's forehead; the other edges of the mouth of the hard cover can be equipped with a flexible shading cloth for shielding light.

In order to increase the three-dimensional effect of the displayed scene, the said head-mounted display may also be processed to make it become a head-mounted display with a naked-eye 3D function and with the image display surface is concave.

The distance between the pupils of a person's eyes is about 65 mm; when looking at the same scene, the images generated in the eyes are not exactly the same, they are two images with different fields of view; after these two images with different fields of view are synthesized in the brain, people will feel the 3D vision.

3D video also applies this principle to present two images with different fields of view in two eyes at the same time, after the synthesis of the brain, a person produces stereoscopic 3D vision.

There are currently two methods for making 3D videos: one method is that one camera carrying two lenses is used for imitating people's eyes side by side with a certain distance from each other to take two images with different fields of view at the same time; when this video is displayed, there is only one subject direction, and the viewer cannot switch the field of view to watch scenes in other directions in the image video, which is also a traditional 3D movie shooting method, and this image video has a strong sense of 3D and reality.

Another method is to convert the internal cylindrical surface image video or internal spherical surface panoramic image video (including those of real reality shooting or made with 3D software) to two video images with different field of views in real time through the play software; through the splitting screen display of the head-mounted display, viewers can not only see images and videos with 3D vision, but also see 3D visual images of objects in different directions in the scene.

However, in the 3D video produced with these two methods, the field of view of the overlapping part of the two images is too large, which is almost two identical images; after passing through the magnifying glass of the head-mounted display in the prior art, the horizontal field of view will be greater than 80° , and the viewer's eyes will be deflected in different directions for a long time, which will cause visual fatigue easily.

The horizontal field of view angle of the comfortable sight of a person's single eye is only 60°, and that of the overlapping portion of the two eyes should be less than 60°, that is, when the image displayed on the left and right eyes and the horizontal field of view of the overlapping portion of the adjacent side is less than 60°, the viewer will feel more comfortable.

When a person observes a scene normally, although the overlapping horizontal viewing angle of the eyes is close to 124°, the horizontal field of view within 10° is a sensitive area where the human eye has the strongest ability to discern the details or colors of the scene viewed, and within the field of view, the human eye can concentrate on observing a scene for a long time; the angle of view within 30° is an effective field of view where the human eye can focus on identifying the information of the scene by simply rotating the eyeball with normal habits; therefore, when people concentrate on watching, and the horizontal field of view of the overlapping part of the image seen by the left and right eyes is 124°, 60°, 30° or 10°, the 3D vision of people will not be significantly various; even when the horizontal field of view of the overlapping part of the image is only 10 °, the viewer will have an obvious 3D feeling, but as the horizontal field of view of the overlapping part of the image viewed by the left and right eyes decreases, the human eye will feel more comfortable.

Due to the different horizontal fields of view angle of various head-mounted displays ,and the same image overlap width the horizontal field of view of the display area on different head mounted displays is different; the 3D video play software should be able to adjust the width of the overlapping portion of images with a difference of field of view, or determine the specific image overlap width value according to the specific head-mounted display; for the 3D video displayed by the current mobile phone screen type head-mounted displays less than 6 inches on the market, including the said two images with a difference of field of view as displayed in front of the left eye and the right eye in the 3D image video, only the right region of the image displayed in front of the left eye and the left region of the image displayed in front of the right eye are similar image regions with parallax; the left-right width of the said similar image regions with parallax is smaller than or can be adjusted to be smaller than three quarters of the left-right width of the image displayed in front of the left (or right) eye, which is equivalent to a horizontal field of view angle of 60°; or it is adjusted to be smaller than one half of the said left-right width of the image displayed in front of the left (or right) eye, which is equivalent to a horizontal field of view angle of 40°.

Two 180° fisheye lenses can be used to simulate human eyes to shoot 3D video; these two fisheye lenses are horizontally arranged side by side, their optical axes are parallel or deflected inward for less than 10°, and the front-end lens centers are about 65 mm away; Adjacent parts within the mid-line of two images at the same time captured at the same time will only retain a certain width to ensure that, when displayed on a head-mounted display, the horizontal field of view of the overlapping part is less than 60° to obtain a 3D video.

For the internal cylindrical surface image video or the internal spherical surface panoramic image video, according to the 3D display structure and its resolution, suitable 3D video playback software can be applied to take the display screen area between the first line parallel to the column pixel of the display screen and the left edge of the display screen as the left eye selection area, and the display screen area between the second line parallel to the column pixel of the display screen and the right edge of the display screen as the right eye selection area; the left-right width of both the left eye area and the right eye area is equal to N times (0.5<N<0.9) of the left-right width of the display screen; the horizontal field of view of the overlapping area of the said left-eye selection and the right eye selection area is B degrees (B is less than 60° ), keeping the relative positions of the left-eye selection and the right-eye selection fixed, the image displayed in the left-eye selection area to be displayed in the display screen area viewed by the left-eye, the image displayed in the right-eye selection area to be displayed in the display screen area viewed by the right-eye; the video pictures displayed in the left and right eye selection areas can be pictures from different fields of view of the same frame, or pictures separated by a few frames (so that the 3D effect is stronger).

The head-mounted display with a naked-eye 3D function and with the image display surface is concave is parallax barrier naked-eye 3D concave head-mounted display or lenticular lens naked-eye 3D concave head-mounted display or naked-eye 3D concave head-mounted display with splitting screen.

For the parallax barrier naked-eye 3D concave head-mounted display, there is a layer of suitable parallax barrier on all or part of the surface of the concave display screen of the head-mounted display; for this type of head-mounted display, by virtue of suitable image video play software and occluded by opaque stripes of the parallax barrier, the left-eye image of the wearer of the head-mounted display is a simulated scene image that should be seen from a left-eye perspective in a real scene, and the right-eye image is a simulated scene image that should be seen from a right-eye perspective in a real scene; the said suitable parallax barrier refers to that the parallax barrier can enable the wearer to view the 3D image video displayed within 25cm, and both the left eye and the right eye have one basically fixed observation point respectively, it is required that the sum of the width of the transparent slit and the opaque part of each grating of the parallax barrier should be 130c/(65+c)mm (c means the width of the column pixel of the display screen), the transparent slit in each grating of parallax barrier should be 0.25-0.4 times of the width of the corresponding grating, and the distance between the grating and the corresponding pixel should be less than or equal to 250c/(65+c)mm and be parallel to the corresponding column pixel.

For the lenticular lens naked-eye 3D concave head-mounted display, there is a layer of suitable lenticular lens on all or part of the surface of the concave display screen of the head-mounted display; for this type of head-mounted display, by virtue of suitable image video play software and refraction by the lenticular lens, the left-eye image of the wearer of the head-mounted display is a simulated scene image that should be seen from a left-eye perspective in a real scene, and the right-eye image is a simulated scene image that should be seen from a right-eye perspective in a real scene; the said suitable lenticular lens refers to that the said lenticular lens can enable the wearer to view the 3D image video displayed within 25cm, and both the left eye and the right eye have one basically fixed observation point respectively, so it is required that the density of the said lenticular lens should be larger than 161 lines for each inch, the distance from the arc top of the lenticular lens to the corresponding pixel (i.e. the thickness of the lenticular lens) should be less than 0.3mm, width of each lens should be equal to the sum of the width of two corresponding column pixels, and each lens should be parallel to the corresponding column pixels.

For the head-mounted display with a naked-eye 3D function and with the image display surface is concave, compared with the ordinary plane naked-eye 3D display, the left eye and right eye of the wearer have only one basically fixed observation point respectively, and it is not required that there should be several 3D feeling observation points as required by the ordinary plane naked-eye 3D display; the distance from the observation point of the wearer's eyes to the display screen in the front should be no more than 25cm, the horizontal and vertical effective field of view of the wearer should be about 30° and 20° respectively, the regional field of view where people can focus on observing a scene for a long time is 10°; therefore, the parallax barrier or lenticular lens may be manufactured only in a small local area in the middle of the concave display screen (e.g. within 30° horizontal field of view angle or 10 ° horizontal field of view angle), and the other part should be displayed in the mode of 2D; it is not required that the whole concave display screen is pasted with lenticular lens or parallax barrier, which can significantly reduce the making difficulty; the display screen area without pasting parallax barrier in the said parallax barrier naked-eye 3D concave head-mounted display can be coated to reduce the luminance to make the luminance of the whole concave display screen be even approximately.

There is a naked-eye 3D display, whose display screen is flexible and bendable, with a layer of parallax barrier or lenticular lens on the surface; this parallax barrier or lenticular lens is suitable for viewing 3D image videos at a distance of distinct vision; the display screen can be curved to form a concave surface by a head-mounted bracket and fixed to the head of the wearer; the head-mounted bracket fixes the display screen at a position where the wearer can clearly and correctly view the display screen to display a 3D image, and becomes a head-mounted naked-eye 3D concave display.

There is a manufacturing method of naked-eye 3D display screen, including the plane ink-jet method or printing method, where pixel materials of the display screen are printed on the planar substrate for supporting the pixel circuit in sequence with an ink-jet printer or printing equipment or tools; the planar substrate used to support the pixel circuit of the display is a transparent plastic sheet that can meet the requirements; after completing the flat printing steps of the pixel circuit required for the display screen, print the appropriate parallax barrier or lenticular lens on the whole or middle of the display surface of the display screen (such as within 30°of horizontal field of view), corresponding to the exact position of the column pixel; the pixel array of the display screen is arranged in a matrix of a normal flat display screen; this can make a bendable naked eye 3D display screen; the thickness of the said plastic sheet should satisfy the distance between the parallax barrier or the lenticular lens and the corresponding pixel; this bendable naked-eye 3D display screen can be bent into a partially internal cylindrical surface through a head-mounted bracket and fixed on the wearer's head, right in front of both eyes, so that the said wearer can clearly and correctly view the displayed 3D image; it becomes a naked-eye 3D concave head-mounted display.

There is a manufacturing method of naked-eye 3D concave display screen, comprising: as in the existing art, display screens are manufactured with a print method where the pixel circuit material of the display screen is sequentially printed on a planar substrate supporting the pixel circuit by an inkjet printer or a printing device or a printing tool, which is characterized in that: the planar substrate used to support the pixel circuit of the display screen is a plastic sheet that can meet the requirements of strength, transparency, thickness and deformation performance; the printed pattern of the pixel array is a pattern after the pixel array pattern required for a concave display screen is flattened; after completing the pixel circuit printing step required for the display screen, the said plastic sheet prints a suitable parallax barrier or the lenticular lens in the middle of the image display surface of the display screen image (for example, within 10° of the horizontal field of view), corresponding to the accurate position of the column pixels; the said parallax barrier or lenticular lens printed on the display surface corresponds to the curved shape of the corresponding column pixel in the printed pattern of the pixel array; the said substrate which has been printed is changed to the required shape for naked-eye 3D concave display screen after bending and/or stretching and/or shrinking and/or torsion and other deformations; the thickness of said plastic sheet should meet the distance between the parallax barrier or the lenticular lens and the corresponding pixel.

For the printed material of the said lenticular lens, a glue having a certain flexibility and high transparency after the condensation can be selected.

The naked-eye 3D concave head-mounted display with splitting screen installs a light baffle between the left and right half screen of concave display screen of said head-mounted display, and the wearer of this kind of head-mounted display can view the image video with different viewing angles of certain overlap width with a suitable image video playback software; the left eye of the wearer can only see the image displayed on the left half screen, which is a simulated scene image that the left eye should see in a real scene, and the right eye can only see the image displayed on the right half screen, which is a simulated scene image that the right eye should see in a real scene; the light baffle is preferably non-reflective black.

There is a head-mounted bracket, the head-mounted bracket is used to bend a bendable display screen into a concave surface and fixed to a wearer's head, or the head-mounted bracket is used to fix a concave display screen to the wearer's head, the head-mounted bracket can fix the display screen at a position where the wearer can clearly and correctly view the display image of the display screen, and there is no magnifying glass or reflection between the display screen and the wearer's eyes .

This head-mounted bracket can also include a light baffle; the light baffle is mounted on the head-mounted bracket to separate the left and right half screens of the display screen, so that the left eye of the wearer sees only the image displayed on the left half screen and the right eye sees only the image displayed on the right half screen; it can turn a two-dimensional display into a naked-eye 3D concave head-mounted display.

A head-mounted display comprises a display screen and a head-mounted bracket; the said display screen is a concave display screen; the image display surface of the said concave display screen is a concave surface; the pixel unit of the said concave display screen can be controlled by an electric signal to realize electroluminescence; there are two concave display screens on the head-mounted display, or two integrated concave display screens composed of more than two display modules; the said head-mounted bracket fixes the two concave display screens on the wearer's head, and fixes the position where the wearer can clearly and correctly view the images displayed on the concave display screen; there are no magnifying glasses or reflectors between these two concave display screens and this wearer's eyes; the wearer can watch with the naked eye or with their own vision-correcting glasses; these two concave display screens can be controlled by software to form an integrated concave display screen, which displays images and videos like one concave display screen; the two concave display screens can also display different images and videos at the same time; the left and right concave display screens are separated by a baffle, so that the wearer's left eye can only see the image and video displayed on the left concave display screen and the right eye can only see the image and video shown on the right concave display screen; by playing parallax images and videos at the same time, the wearer can generate stereo vision.

The circuit board of the above said head-mounted display installs: power line interface, which is used to power the display; HDMI interface and/or other signal line interface, which is used to connect with computer or other equipment with image/video play function, and display the image and video to be played on the said head-mounted display; and headphone interface.

The head-mounted display can be used to connect a computer or a hard disk video recorder, and then to a camera or a computer-enabled device and a camera through a wired network and / or a wireless network, and display the real-time images and videos shot by the camera connected on the said head-mounted display or record by the computer or hard disk video recorder; the camera may be a fixed position camera or a moving camera.

In order for the head-mounted display to play a motion movie or a game with a sensory effect, the said head-mounted display further includes a scene special effect device.

The scene special effect device comprises: an air tube nozzle, a high-pressure air-tube nozzle, an odor tube nozzle, a water mist nozzle or a nozzle swinging device or a pneumatic or electric device that touches, presses or scratches the wearer's skin.

The said scene special effect device is installed on the head-mounted display and / or a specified position on the body surface of the wearer.

When this head-mounted display plays a motion movie or motion game video with a sense effect, the scene special effect device makes the head-mounted display wearer has a feeling of wind blowing, airflow, odor, water mist, collision, pressure, scratching according to the needs of the film and television scene.

Each of the components is connected in such a way that: the said head-mounted display is connected to the computer through a signal cable (such as an HDMI cable), and the earphones are inserted into a computer headphone jack or a headphone jack of a circuit board of the head-mounted display.

The said air tube nozzle is connected to the air outlet of a blower or a hair dryer through an air pipe.

The said high-pressure air-tube nozzle is connected to an air compressor through a high-pressure air tube, a solenoid valve or a high-pressure air manifold.

The said odor tube nozzle is connected to an air compressor through a high-pressure air tube, an odor bottle, a solenoid valve or a high-pressure air manifold; the smell can also be injected into the said air tube by pressing the odor bottle through the electromagnet and blown into the wearer's nostril.

The said water mist nozzle is very small, and the high pressure water is sprayed into water mist; the water mist nozzle is connected to the air compressor through a high-pressure air tube, a water bottle, a solenoid valve or a high-pressure air manifold.

The said nozzle swinging device can swing the nozzle in the direction required by the scene special effect. The said nozzle swing device is a micro steering gear, or a device for transferring the displacement of a pneumatic piston rod or an electric push-pull rod or an electromagnet push-pull rod driven by a brake line; the said pneumatic piston rod is connected to an air compressor through a high-pressure air tube, a solenoid valve or a high-pressure air manifold; according to the needs of the video scene, the computer transmits the scene special effect signal to the scene special effect control circuit module through a signal line (such as 485 line or 232 line), and controls the power line of the said nozzle swinging device to be turned on or off, so as to cause a displacement action, to realize the deflection and swing of the high-pressure air-tube nozzle, and the electromagnetic valve of the high-pressure air pipe is used to connect the high-pressure air-tube nozzle to blow the air to realize the swing of the air jet; the said brake cable functions like a bicycle brake cable, and the wire in the brake cable can transmit the force or displacement at one end to the other end.

The said pneumatic device for generating a touch or pressure or stroke on the wearer's skin comprises: a pneumatic piston rod, an airbag or an air cover (namely cover of the air tube nozzle) capable of reciprocating movement under the action of air pressure and restoring force (such as elastic force); the said pneumatic device is connected an air compressor through a high-pressure air tube, a solenoid valve or a high-pressure air manifold.

The said electric device for generating a touch or pressure or stroke on the wearer's skin comprises: a micro steering gear, an electric push pull rod, a safe electric pulse electrode, a rocker arm driven by motor shaft or an electromagnet push-pull rod.

The computer sends the motion movie or motion game action signal to the scene effect control circuit module in real time through the signal line (such as 485 line or 232 line) to control the power line of the said solenoid valve, electric device and blower or hair dryer to be turned on or off, so that the corresponding equipment generates blowing, jetting or collision.

The said air tube nozzle makes the wind blow to the wearer's face or other exposed skin parts, or makes the wind blow into the concave display screen first, and then return to the wearer's face from the concave display; the said odor tube nozzle can spray the odor to the nostril of the wearer.

A pressure regulating valve can be installed on the high-pressure air pipe branch to set the pressure of the high-pressure air spray.

The air flow exhausted from the said high-pressure air-tube nozzle can also simulate the wind.

The said air compressor, solenoid valve, water storage bottle, odor bottle, blower, electromagnet, scene special effect control circuit module are placed outside the body of the wearer of the head-mounted display, or a small device with the same function is worn on the head-mounted display wearer's body; the said air compressor can be replaced by a small high-pressure gas cylinder filled with compressed gas.

Connected to a computer, the said head-mounted display with the said scene special effect device can play a dynamic movie or game video with a sensory effect stored in the computer, or play a dynamic movie or game video with a sensory effect transmitted by the computer network, or play a video making the wearer have a sensory effect controlled by the other party of the game or dialogue and transmitted by the computer network.

In order to increase the recognition capability and human-computer interaction performance of the said head-mounted display, the said head-mounted display may further be equipped with a sensor.

The said sensor is connected to the computer through a signal line (such as USB cable), and the sensing signal is passed through the computer according to a corresponding program to change the image video content displayed on the head-mounted display.

The said sensor is mounted in: a fixed part and fixed direction of the said head-mounted display, a fixed part and fixed direction of the head-mounted display's wearer or a fixed part and fixed direction of the scene propos.

The said sensor comprises an acceleration sensor, a magnetic field sensor, a gyroscope, a gravity sensor, a photoelectric sensor, a fingerprint sensor, a face recognition sensor, an iris recognition sensor, an eyeball recognition sensor, an eye tracking sensor, a gesture recognition sensor, an air pressure sensor, GPS, a temperature sensor, a pulse rate sensor, a blood pressure sensor, a blood oxygen sensor, a sound sensor, or a camera.

When experiencing virtual reality games, a keyboard and mouse are not required; the head-mounted display wearer only needs to move or rotate a part of the body or a part of the game props and then the corresponding sensors in these parts will transmit the sensing signal to the computer, to control the changes in the game scene displayed by this head-mounted display; the said acceleration sensor can control the acceleration and deceleration of characters in the game; the said magnetic field sensor may control the direction of movement of the characters in the game; the said gyroscope can control the rotation the virtual scene when the wearer turns his head; the said gravity sensor can make the object in the virtual scene conform to the physical motion under the action of real gravity.

The said photoelectric sensor is positioned at: a fixed part and fixed direction of the said head-mounted display, a fixed part and fixed direction of the head-mounted display's wearer or a fixed part and fixed direction of the scene propos, such that the photoelectric sensor can only receive light in a respective fixed direction and generate an electrical signal and pass it to the computer; when at a certain time, at least two fixed distances of a known distance are emitted, and the light of the direction of the known time is irradiated to a certain direction of the photoelectric sensor, the photoelectric sensor sends electrical signals and its own installation location address to the computer, the position and direction of the photoelectric sensor at this moment can be obtained through calculation; photoelectric sensors on multiple parts of the wearer's body, sends electrical signals and its own installation location address to the computer, and calculates the spatial position and shape of the wearer's body at this moment and maps it to the visual scene displayed on the head-mounted display to achieve the virtual and realistic interaction.

The wearer's limb motion sensing signal can also be transmitted through the network to a computer-controlled device capable of generating the corresponding feeling at the other end for network video sensory communication.

The said fingerprint sensor, face recognition sensor, iris recognition sensor, eyeball recognition sensor can save and compare the characteristics of a part of the human body for identification and network payment of certain operations of the head-mounted display.

The said air pressure sensor and GPS can determine the position on the map of the wearer's location in the map displayed on the head-mounted display, so as to find the location of various services.

The said eye tracking sensor can predict the wearer's psychology or needs through the computer according to the eye movement state of the wearer, and responds to the purpose of controlling the content displayed on the head-mounted display by the eyes.

The gesture recognition sensor can achieve the purpose of controlling the display content of the head-mounted display through the movement and shape of the wearer's hand.

The temperature sensor, pulse heart rate sensor, blood pressure sensor and blood oxygen sensor can sense the body temperature, pulse heart rate, blood pressure, blood oxygen and other physiological information of the wearer, display it on the display screen of the head-mounted display, and transmit it to the doctor's display screen through the network for reference data of telemedicine or physiological monitoring; or body physiology data of virtual game characters.

The camera and sound sensor can record scenes, and display them on the display screen of the head-mounted display and in the earphones; The said sound sensor may also collect the voice of the wearer for input or operation of the head-mounted display.

The head-mounted display also comprises a computer function module; the said computer function module can be connected to the Internet through its communication unit, and can be connected by a wired network or a wireless network.

The wearer of the head-mounted display displays the images and videos in the storage unit of the computer function module or the Internet transmission through the operation of the input device on the display screen of the head-mounted display.

The computer function module is in the head-mounted display or worn on the display's wearer or is placed outside of the body of the display wearer.

The said head-mounted display including a computer function module may further comprise a mobile communication module; the mobile communication module may be connected to a smart phone mobile communication network; the wearer can display the image and video information sent by other smart terminals used in the mobile communication network or the image and video information searched on the Internet through the corresponding operation on the display screen of this head-mounted display.

At present, a method for shooting a first-view panoramic video on a moving object is to fix the panoramic video camera on the moving object.

For example, when shooting a video on a driving roller coaster, a panoramic video camera is fixed on the roller coaster; the shooting direction of each camera in the panoramic video camera is fixed to the orientation of this roller coaster; the camera in the forward direction of the roller coaster is always in its forward direction; when the roller coaster turns to south, the shooting direction of the camera turns to the south; when the roller coaster turns down, the shooting direction of the camera turns down.

For another example, when shooting a quick-drop ski or mountain off-road motorcycle race from the view of an athlete, the panoramic video camera is fixed to the head of the athlete; when the athlete's head turns to east, the shooting direction of the forward camera turns to the east, vice versa.

When the panoramic video shot in this way is displayed on the monitor through the panoramic video playback software, if the middle part of the display screen shows the forward direction of the beginning of this panoramic video, then no matter how the forward direction of the video scene is rotated, the middle part will always show the forward direction of this panoramic video without moving the displayed screen by mouse, keyboard or gyroscope; If when displaying with a head-mounted display, the head of the wearer does not need to rotate and the front is always a video scene in the forward direction, that is, the wearer is always facing the forward direction; if the head is rotated, the screen will deviate from the forward direction; if the forward direction changes when the wearer does not turn his/her head, this video does not have a sense of direction and cannot display the forward direction menu by turning the head of the head-mounted display's wearer, rotating body on a dynamic seat or through a mouse, keyboard, or gyroscope; this causes the video to lose the real presence or not used as a game video that moves in various directions in the virtual scene.

The correct method should be to install a constant-direction bracket on the moving object where the panoramic video camera is installed (such as carriage of roller coaster, athlete's head, flying camera, mobile camera support or hanger); Ideally, when the moving object rotates or moves in multiple directions, this constant-direction bracket can maintain the shooting direction of each camera of the panoramic camera, never change the direction relative to the up/down/south/north/east/west direction, and does not rotate with the rotating of said object; the camera in the panoramic camera keeps always southward, eastward or downward; regardless of how the moving object rotates or moves, the shooting direction of each camera in this panoramic camera is only as the moving object is translated, without rotation; in this way, when watching a video through a head-mounted display, the wearer needs to turn his head, or be driven by a dynamic seat, and rotate his body to turn his head in the forward direction; the scene is displayed in front of the eyes, and then it can be rotated up, down, left and right with the video scene, reflecting the real presence.

When a series of panoramic video shot by the panoramic camera installed on a rotating object in multiple directions is displayed on the ordinary plane display through the panoramic video player software, the forward direction of said object in the displayed image rotates relative to the display screen with the rotation of the object in the scene without moving the displayed image by a mouse, keyboard, or gyroscope; as the object moves forward in the scene, the object moves forward in the displayed frame relative to the display; when the forward direction in the said panoramic video turns left, the displayed scene is shifted to the right, and when the forward direction is turned down, the displayed scene is shifted upward; only by moving the screen with a mouse, keyboard or gyroscope can the screen be turned to the forward direction.

When the panoramic video captured in this way is displayed on a head-mounted display with a gyroscope function, the direction in which the said object advances can only be followed by turning the head; the fixed objects in the scene, such as mountains and buildings, simply move backwards with the movement of the panoramic camera and do not rotate; in this way, the wearer of the head-mounted display will feel that the fixed objects such as the said mountain and the building are stationary; the brain naturally uses the fixation as a reference for its own movement; after a long period of evolution, human sensory organs are highly coordinated and sensitive; the vestibule in the inner ear is responsible for feeling the balance of the body; if the forward direction of rotation in the video does not require the head-mounted display wearer to turn his head, or the cooperation is inaccurate, the said wearer will feel the video scene is fake; at this time, if the scene turns frequently in the video, the wearer will be easily dizzy; this is also the reason for the dizziness of videos that are currently shot in a fixed forward direction and videos that are rough produced by 3D software.

The said constant-direction bracket may be a constant-direction bracket controlled by a gyroscope, or a constant-direction bracket utilizing magnetic field and / or liquid suspension, or a panoramic camera is hung on a thin and freely rotatable line, and the panoramic camera is added weight to increase the stability of the shooting direction.

Due to the stability of the said constant-direction bracket and the camera's swing in actual shooting, it is impossible for the camera to maintain an absolute constant direction; the said constant-direction bracket is only used to reduce the shooting direction of each camera of the panoramic camera, relative to the swing of up, down, south, north, east or west directions; if the swinging angle of the shooting direction of each camera of the said panoramic video camera is smaller, the closer to reality of direction-sense of the video scene is; the wearer can view the game video moving in the virtual scene for a long time; the panoramic image video shot by the constant-direction bracket has a strong sense of reality and direction, and can enhance the sense of presence and immersion of the scene displayed on the said head-mounted display.

### EFFECTS OF THE INVENTION

Compared with the prior art, this invention has the following beneficial effects:

The head-mounted display of this present invention displays the image video picture on a concave stereo space around the wearer's eyes through its concave display screen, it is close to the feeling of a person viewing a real scene and has a strong sense of presence and immersion; because there is not a magnifying glass or retroreflector between the display screen and the wearer's eyes, and the 2D image displayed by the concave display screen or 3D image displayed on naked-eye 3D concave display screen with small overlapping horizontal viewing angle is close to the normal viewing habits of human eyes, the wearer can view it for a long time without fatigue, and can't dizzy and dizzy; the sense of presence and immersion of virtual scene is enhanced by the video with strong sense of direction, scene special effect device, sensor, computer function module or mobile communication module.

### BRIEF DESCRIPTION OF THE DRAWINGS

FIG. 1 is a schematic structural diagram of an embodiment of a head-mounted display according to the present invention.
FIG.2 is the horizontal field of view distribution map of the wearer's eyes on a concave display screen with the partially internal spherical surface.
FIG.3 is the vertical field of view distribution map of the wearer's eyes on a concave display screen with the partially internal spherical surface.
FIG. 4 is a schematic diagram showing several examples of shapes of an image display surface of a concave display screen of a head-mounted display according to the present invention.
FIG.5 is a schematic diagram of a pixel array structure of a concave display screen with the partially internal cylindrical surface of a head-mounted display according to the present invention.
FIG. 6 is a schematic diagram of a pixel array structure suitable for displaying a fisheye image video on the concave display screen with the partially internal spherical surface.
FIG. 7 is a schematic diagram of a pixel array structure arranged like the latitude lines and longitude lines of the globe in a concave display screen with the partially internal spherical surface.
FIG.8 is a schematic diagram of an embodiment of circuit structure of interface between the pixel electrode and the driver in a concave display screen with the partially internal spherical surface.
FIG. 9 is a detailed diagram of FIG. 8.
FIG.10 is a schematic diagram of the first method for manufacturing a concave display screen according to the present invention.
FIG. 11 is a schematic diagram of the second method for manufacturing a concave display screen according to the present invention.
FIG. 12 is a schematic diagram of the third method for manufacturing a concave display screen according to the present invention.
FIG. 13 is a schematic diagram of an embodiment of a combination of a head-mounted display, the scene special effect device , and the sensor according to the present invention.
FIG. 14 is a schematic diagram of a hard hood in a head-mounted display according to the present invention.
FIG. 15 is a schematic diagram of the field of view distribution of left / right eye image of a 3D video displayed by a head-mounted display of the present invention.
FIG. 16 is a schematic structural diagram of an embodiment of the head-mounted bracket.
FIG. 17 is a schematic structural diagram of the panoramic video camera installed on a constant-direction bracket.

### MODE FOR CARRYING OUT THE INVENTION

The present invention will be further described in the following through embodiments and the figures; It can be understood that the specific embodiments described below are only used to explain the present invention, rather than limiting the claims of the present invention; for ease of description, only some parts related to the present invention are shown in the drawings, rather than the entire structure.

The structure of one embodiment of the head-mounted display of the present invention is as follows.

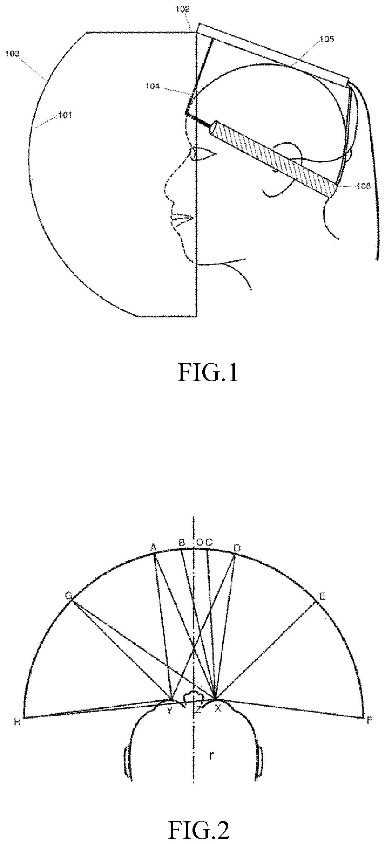

FIG. 1 is a schematic structural diagram of an embodiment of a head-mounted display according to the present invention; the said head-mounted display comprises concave display screen 101 and head-mounted bracket 102; head-mounted bracket 102 comprises display screen shell 103, bracket front plate 104, bracket top plate 105 and bracket fixing band 106; display screen shell 103 is a protective layer that protects the display screen and keeps the display screen in a correct concave shape; bracket fixing band 106 fixes head-mounted bracket 102 at the wearer's head, blocks the wearer's ears from voice outside, prevents the headphone from falling off; the distance between the wearer's eye and the display screen in front is the distance of distinct vision; there is no magnifying glass or retroreflector between the concave display screen 101 and the wearer's eyes.

FIG.2 is the horizontal field of view distribution map of the wearer's eyes on a concave display screen with the partially internal spherical surface; suppose the spherical center of partially internal spherical surface of the concave display screen is Z point, the observation point of the wearer's right eye is X point and the observation point of the wearer's left eye is Y point, the midpoint of the X and Y connecting lines is at the Z point; the wearer's eyes are symmetrical to the left-right symmetry plane r (dash-dot line in the figure) of the partially internal spherical surface, the interaction point O between the horizontal plane that is vertical to the symmetry plane r through point Z and the symmetry plane r on the partially internal spherical surface is the center of field of view; within the visible scope, the human eyes extend outward from O point; angle BXC is 10° and BC section is a horizontal field of view sensitive area; angle AXD is 30°and AD section is a horizontal effective field of view; angle GXE is 100°and GA section and DE section of the field of vision are horizontal sensing field of view; angle HXF is 200°and HG section and EF section of the field of view are horizontal auxiliary field of view.

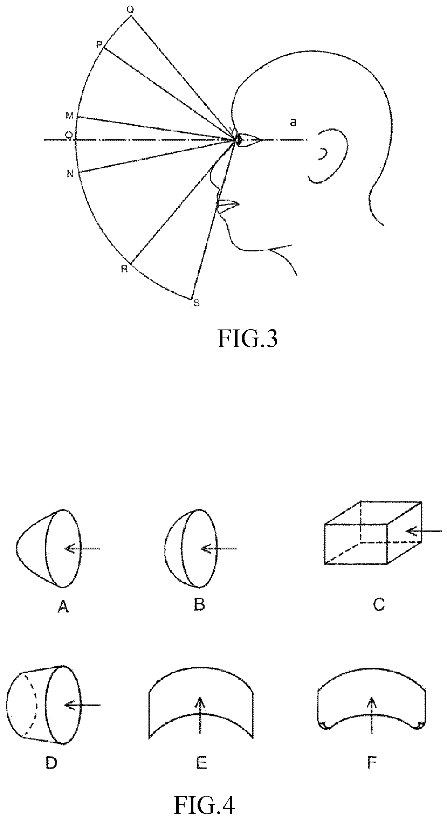

FIG.3 is the vertical field of view distribution map of the wearer's eyes on a concave display screen with the partially internal spherical surface; suppose the said horizontal plane being vertical to the symmetry plane r through Z point as a (dash-dot line in the figure); angle MYN is 20° (angle MYO is 8°, and angle OYN is 12°) and MN section of the field of view is vertical effective field of view; angle PYR is 85 °and PM section and NR section of the field of view are a vertical sensing field of view; angle QYS is 135°, and QP section and RS section of the field of view are a vertical auxiliary field of view.

For the concave display screen of the said head-mounted display, there are many kinds of shapes of image display surfaces, the schematic diagram of the shapes of the said concave display screen image display surface is shown in FIG.4.

A concave surface without polygonal point or polygonal line, such as the partial paraboloid is shown in Figure A of FIG. 4 and the partially internal spherical surface is shown in Figure B of FIG. 4.

A concave surface formed by bending the left and right sides of a flat display screen toward the image display side of this display screen, for example, by bending the flat display screen left and right toward its image display side to bend into a partially internal cylindrical surface, as shown in Figure E of FIG. 4.

A concave surface formed by bending the left and right sides of the flat display screen toward the display side of the display screen, and at least one corner of the display screen bending toward the image display side of the corner portion; Figure F of FIG.4 shows the concave formed by the bending of two corners of partially internal cylindrical surface to the display side.

A concave surface with polygonal point or polygonal line, such as internal surface of polyhedron, as shown in Figure C of FIG.4 and internal surface of circular table, as shown in Figure D of FIG.4.

The direction indicated by the arrow in FIG.4 is the direction in which the said wearer views the image.

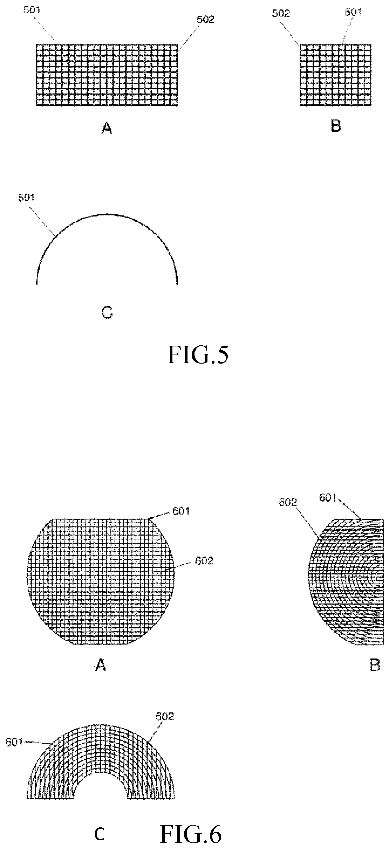

For a concave display screen with the partially internal cylindrical surface formed by bending the left and right sides of a flat display screen toward the image display side of this display screen, the schematic diagram of its pixel array structure is shown in FIG.5 and the front view of its pixel array structure is shown in Figure A of FIG. 5; the row pixel 501 is the horizontal line and the column pixel 502 is the vertical line; the top view of its pixel array structure is shown in Figure C of FIG.5; the row pixel 501 is a section of circular arc, and the column pixel is the point on this section of circular arc; the side view of its pixel array structure is shown in Figure B of FIG.5; the row pixel 501 is the horizontal line and the column pixel 502 is the vertical line.

For the said concave display screen with the partially internal spherical surface used to display the fisheye image video, the schematic diagram of its pixel array structure is shown in FIG. 6 and its front view is shown in Figure A of FIG. 6; the row pixel 601 is the horizontal line and the column pixel 602 is the vertical line; the top view of its pixel array structure is shown in Figure C of Figure 6; the row pixel 601 is the circular arc of the parallel concentric circles and the column pixel 602 is the vertical line; the side view of its pixel array structure is shown in Figure B of FIG.6; the row pixel 601 is the horizontal line and the column pixel 602 is the circular arc of the parallel concentric circles.

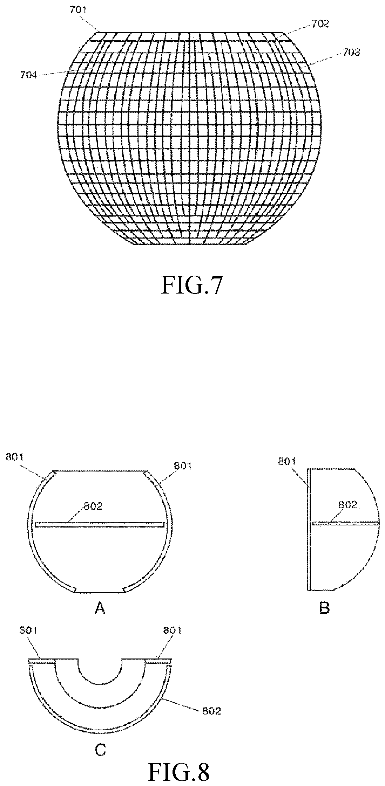

For the concave display screen with the partially internal spherical surface to display the panoramic image video of the internal spherical surface, its pixel array structure is like the arrangement of the latitude lines and longitude lines of the globe, as shown in FIG.7; the row pixel 701 is the horizontal line, like the latitude lines of the globe; the column pixels 702, 703 and 704 like the longitude lines of the globe; because the area of the upper and lower sides of the internal spherical surface gradually narrows, the column pixels also gradually shortened according to a certain rule on the upper and lower sides of the internal spherical surface of the concave display screen; such as the column pixels 703 and 704.

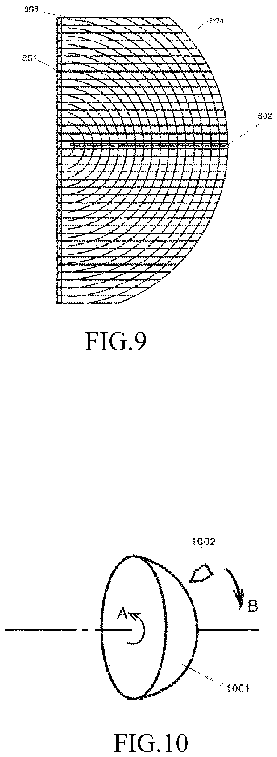

Taking the concave display screen with the partially internal spherical surface as an example, when the display screen is viewed from the back of the display screen, a schematic diagram of an embodiment of circuit structure of interface between the pixel electrode and the driver is shown in FIG. 8; its front view is shown in Figure A of FIG.8, the interface 801 between the scan line electrode (row electrode) and the row driver circuit is an arc on the left and right sides of the pixel array, the interface 802 between the data line electrode (column electrode) and the column driver circuit is in the middle of the data line (column line); its top view is shown in Figure C of FIG.8, the interface 801 between the scan line electrode (row electrode) and the row driver circuit is on the left and right sides of the pixel array, the interface 802 between the data line electrode (column electrode) and the column driver circuit is an arc in the middle of the data line (column line); its side view is shown in Figure B of FIG. 8, the interface 801 between the scan line electrode (row electrode) and the row driver circuit is on the edge of the pixel array, the interface 802 between the data line electrode (column electrode) and the column driver circuit is in the middle of the data line (column line); as shown in FIG.9, the detailed diagram of FIG. 8, the row pixel 903 is a horizontal line; the interface 801 between the scan line electrode (row electrode) and the row driver circuit is on the edge of the pixel array and both ends of row pixel 903; the column pixel 904 is the circular arc of the parallel concentric circles; the interface 802 between the data line electrode (column electrode) and the column driver circuit is in the middle of column pixel 904 and data line (column line).

The embodiments of the manufacturing methods of concave display screen of the head-mounted display are shown as follows.

There are multiple methods for manufacturing the said concave display screen, taking the concave display screen with partially internal spherical surface as an example; the first method is shown in FIG. 10, where a suitable ink-jet printer is used to rotate the substrate 1001 of transparent partial spherical shape around its geometric rotation axis (dash-dot line in the figure), the print head 1002 of ink-jet printer sprays the pixel circuit materials of the display screen on the outer surface of substrate 1001 in sequence according to the predetermined stepping procedures, the internal spherical surface of substrate 1001 is the image display surface of concave display screen; the substrate 1001 rotates one circle in A direction, the print head 1002 moves a printing width in B direction; after the complete printing and other processes, the manufacture of concave display screen is completed.

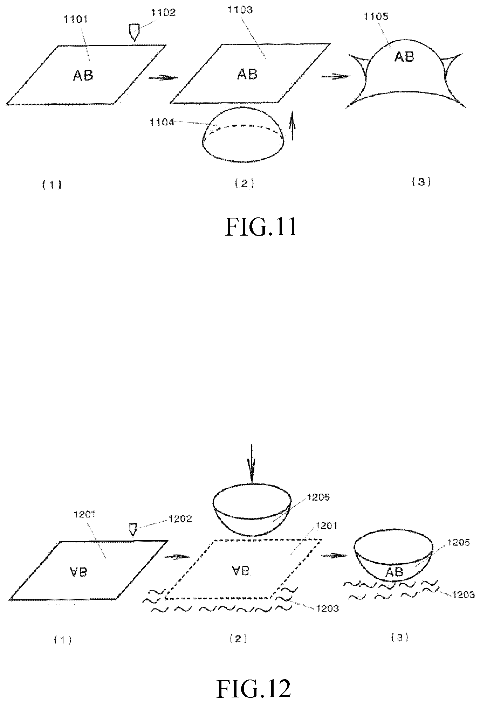

The second method is shown in FIG.11: (1) the plane deployment diagram AB of the concave pattern of the pixel circuit of the display screen is printed on the planar substrate 1101 transparent plastic sheet by the print head 1102 of ink-jet printer, printing equipment or printing tool; (2) the plastic sheet with display screen pixel circuit 1103 is deformed by the mold 1104; (3) It changes to the required concave display screen sheet 1105; the internal spherical surface of 1105 is the image display surface of the concave display screen; the manufacture of concave display screen is completed after other processes.

The third method is shown in FIG.12: (1) the back of the plane deployment diagram of pixel circuit concave pattern AB of the display screen is printed on the cubic transfer film 1201 by the print head 1202 of inkjet printer, printing equipment or printing tool; (2) the cubic transfer film 1201 at the back of the plane deployment diagram printing the concave pattern AB is placed the liquid 1203 which only dissolves the cubic transfer film 1201 rather than the display screen pixel circuit material; after dissolving the cubic transfer film 1201, proper adhesive is applied at the back of transparent concave substrate 1205 of partially internal spherical surface concave display screen; liquid 1203 is pressed in the display screen pixel circuit material pattern of the surface of liquid; (3) the front of the pixel circuit concave patter AB of the display screen is covered at the back of the transparent substrate of the concave display screen; the internal spherical surface of 1205 is the image display surface of the concave display screen; the manufacture of concave display screen is completed after other processes; the liquid 1203 for covering does not dissolve AB printing materials and transparent concave substrate 1205 of the concave display screen.

A embodiment of the combination of head-mounted display, scene special effect device and sensor in the present invention is shown as follows.

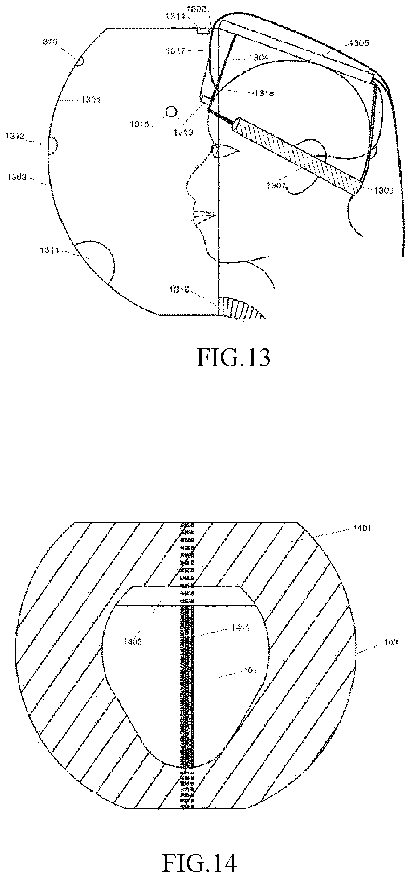

FIG.13 is a schematic diagram of an embodiment of a combination of a head-mounted display, the scene special effect device , and the sensor ; the head-mounted display shell 1303 is equipped with gesture recognition sensor 1311; the wearer may change the picture on the display screen with a gesture; camera 1312 can take pictures of real scenes into virtual scenes; the acceleration sensor 1313 causes the moving object to conform to the actual motion law; photoelectric sensor 1315 displays the wearer's posture through its positioning system; the head-mounted bracket 1302 is equipped with gyroscope 1314, so that the display screen can display the virtual scene of the wearer is looking; the wind blown by air tube nozzle 1316 according to the display video scene returns to the wearer's face via the concave display screen 1301; the bracket front plate 1304 is equipped with high-pressure air-tube nozzle 1318 and air cover 1319; according to the requirements of the display video scenes of the display screen, the high-pressure air is blown to the wearer's forehead via high-pressure air tube 1317 and high-pressure air-tube nozzle 1318 or collides against the wearer's forehead via air cover 1319; bracket fixing band 1306 fixes head-mounted bracket 1302 at the wearer's head and blocks the wearer's ears, so that the headphone 1307 is not easy to fall off; the bracket top plate 1305 is equipped with the circuit board of the display to reduce the weight of the display screen.

One embodiment of the hood structure of the head-mounted display of the invention is shown as follows.

The hood may be flexible; the black-out cloth can be used to enclose the display screen of the head-mounted display (as shown in FIG.1) and eyes of the wearer with a breathable gap at the wearer's neck; the said hood may be a hard shell; the display screen shell of the display shown in FIG.1 may be equipped with a hard hood on one side of the wearer's face; the hard hood 1401 shown in FIG.14 is fixed with the display screen shell 103 and forms a hard shell of hemispherical shape; the bottom of said shell is concave display screen 101; the hard hood 1401 has a suitable port for the wearer's face in the middle; there is a forehead contact surface 1402 contacting with the wearer's forehead at the upper edge of said port; there is a flexible gasket on the forehead contact surface 1402; if the hard hood 1401 cannot be sealed for ventilation, the flexible hood can be used for the shading.

The embodiment of the distribution of left/right eye image field of view of 3D video displayed by the head-mounted display of this invention is shown as below.

Taking the horizontal field of view of the wearer's eyes on the concave display screen with the partially internal spherical surface in FIG.2 as an example, the view distribution of two images of the left and right eyes with different fields of view displayed in the 3D image video in the display screen of parallax barrier or lenticular lens naked-eye 3D concave display is expounded.

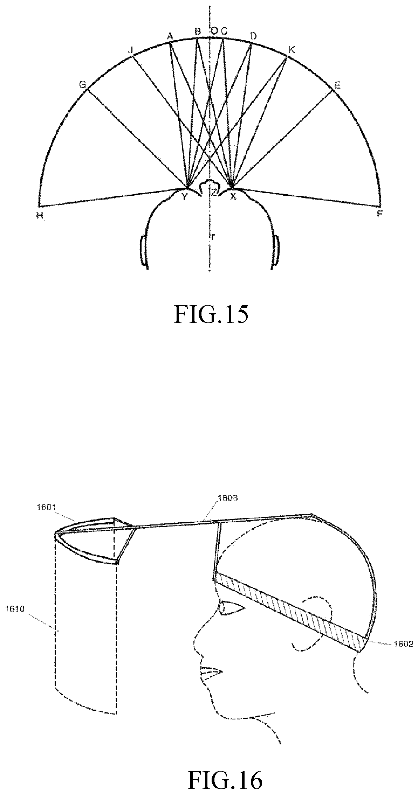

As shown in FIG.15, the left eye area (image field of view displayed in the left eye) is arc HGJABC section and the right eye area (image field of view displayed in the right eye) is arc BCDKEF section; only BC section in the two sections is a similar image with parallax; angle BXC is 10 °; the arc length of BC section is lower than 3/4 of HGJABC or BCDKEF section; the display screen of naked-eye 3D concave display only needs to cover parallax barrier or lenticular lens on the column pixel of BC section; the left eye area is arc HGJABCD section and the right eye area is arc ABCDKEF section; only ABCD section in the two sections is a similar image with parallax; angle AXD is 30°; the arc length of ABCD section is lower than 3/4 of HGJABCD or ABCDKEF section; the display screen of naked-eye 3D concave display only needs to cover parallax barrier or lenticular lens on the column pixel of ABCD section; the left eye area is an arc HGJABCDK section and the right eye area is arc JABCDKEF section; only JABCDK section in the two sections is a similar image with parallax; angle JXK is 60 °; the arc length of JABCDK section is lower than 3/4 of HGJABCDK or JABCDKEF section; the display screen of naked-eye 3D concave display only needs to cover parallax barrier or lenticular lens on the column pixel of JABCDK section.

As shown in FIG.14, parallax barrier or lenticular lens 1411 is only covered on the partial column pixel in the middle of concave display screen 101.

The said naked-eye 3D concave head-mounted display with splitting screen installs a light baffle on the left and right symmetry plane r of concave display screen of the said head-mounted display (such as between point O and Z shown in FIG. 15), and the wearer of this kind of head-mounted naked-eye 3D display can view the image video with different viewing angles with a certain overlap width with a suitable image video playback software; the left eye can only view the image displayed on the display screen in HO section; the right eye can only view the image displayed on the display screen in OF section; the image of HGJABC section is displayed on the display screen of HO section and the image of BCDKEF section is displayed on the display screen of OF section; only BC section in the two sections is a similar image with parallax; the image of HGJABCD section is displayed on the display screen of HO section and the image of ABCDKEF section is displayed on the display screen of OF section; only ABCD section in the two sections is a similar image with parallax; the image of HGJABCDK section is displayed on the display screen of HO section and the image of JABCDKEF section is displayed on the display screen of the OF section; only JABCDK section in the two sections is a similar image with parallax.

FIG.16 is a schematic structural diagram of an embodiment of the head-mounted bracket; the said head-mounted bracket comprises fixing part 1601 of display screen, supporting part 1603 and head-mounted part 1602; the fixing part 1601 of display screen fixes the bendable display screen 1610 into a concave shape, and is fixed on the wearer's head through the head-mounted part 1602; the supporting part 1603 keeps the display screen 1610 in a position that the wearer can clearly and correctly view the display image of the display screen 1610.

When the panoramic video shown on the head-mounted display is shooting, the embodiment of installing the Panoramic video camera on the constant-direction bracket is shown as follows.

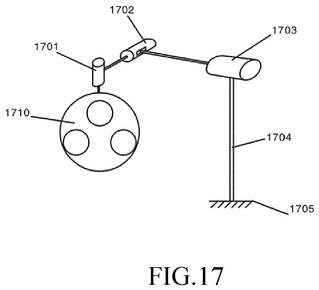

FIG. 17 is a schematic structural diagram of the panoramic video camera installed on a constant-direction bracket; the panoramic video camera 1710 is fixed on the rotating shaft of first servo motor 1701; the rotation axis of first servo motor 1701 points to the center of the panoramic video camera 1710; the rotating shaft of second servo motor 1702 is vertical to that of first servo motor 1701 and fixed to first servo motor 1701; the rotating shaft of third servo motor 1703 is vertical to that of second servo motor 1702 and fixed to second servo motor 1702; the support bar 1704 is vertical to the rotating shaft of third servo motor 1703 and fixed to third servo motor 1703; another end is fixed to the moving object 1705; gyroscope is installed in the center of panoramic video camera 1710 and controls the rotation of the three servo motors through the wireless signal; the three servo motors and panoramic video camera 1710 are supplied by the respective batteries.

When the moving object 1705 changes its moving direction, the support bar 1704 will rotate or swing and control the rotation of the rotating shaft of three servo motors through the gyroscope, so that the swinging of each camera of panoramic video camera 1710 is reduced in the up, down, south, north, east or west direction.

### Industrial applicability

As mentioned above, the head-mounted display of the present invention can be used for the display of video scenes such as virtual reality games, film and television, news, surveillance, and online shopping, medical treatment, conferences, games, conversations, etc.; the display of naked-eye 3D allows the wearer to watch for a long time, which is conducive to the development of virtual reality games and film and television, and to the online sales of 3D video; using a constant-direction bracket with a panoramic video camera, a panoramic video of a directional virtual reality game scene or a movie scene can be captured; the said head-mounted bracket can turn a display with a bendable display screen into a head-mounted display with a concave display.

### Description of marking in the figures:

101, 1301: Concave display screen 102, 1302: Head-mounted bracket 103, 1303: Display screen shell
104, 1304: Bracket front plate 105, 1305: Bracket top plate 106, 1306: Bracket fixing band
501, 601, 701, 903: Row pixel 502, 602, 702, 703, 704, 904: Column pixel
801: Interface of the scan line electrode (row electrode) and the row driver circuit 1001, 1101: Substrate
802: Interface of the data line electrode (column electrode) and the column driver circuit1002, 1102, 1202: Print head
1103: Plastic sheet with display screen pixel circuit 1104:Mold 1105: Concave display screen sheet
1201: Cubic transfer film 1203: Liquid 1205: Transparent concave substrate
1311: Gesture recognition sensor 1312: Camera 1313: Acceleration sensor
1314: Gyroscope 1315: Photoelectric sensor 1316: Air tube nozzle
1317: High-pressure air tube 1318: High-pressure air-tube nozzle 1319: Air cover
1307: Headphone 1401: Hard hood 1402: Forehead contact surface
1411: Parallax barrier or Lenticular lens 1601: Fixed part of display screen 1602: Head-mounted part
1603: Supporting part 1610: Bendable display screen
1701: First servo motor 1702: Second servo motor 1703: Third servo motor
1704: Support bar 1705: Moving object 1710: Panoramic video camera

## Claims

1. Ahead-mounted display, comprising a display screen (101,1301) and ahead-mounted bracket (102,1302) , wherein the display screen (101,1301) is a concave display screen; a image display surface of the concave display screen is a concave surface; the head-mounted display is installed with a concave display screen or an integrated concave display screen composed of more than one display module; the head-mounted bracket (102,1302) fixes the concave display screen to a wearer's head, and at a position where the wearer can clearly and correctly view the image displayed by the concave display screen (101,1301) ; there is no magnifying glass or reflector between the concave display screen and the wearer's eyes; the size of the concave display screen can meet the horizontal field of view angle of the head-mounted display greater than 36 degrees; the horizontal field of view angle of the head-mounted display is:when the head-mounted display is worn by normal viewing, its eye observation point (X/Y) is connected to the middle point (H, F) of the left edge and the right edge of the image display surface, and the angle formed by the two connecting lines.

2. The head-mounted display according to claim 1, wherein the pixel of the concave display screen can be controlled by an electric signal to realize electroluminescence.

3. The head-mounted display according to claim 1, wherein the concave display screen is a display screen that controls the light emission of a pixel by applying a signal voltage directly to the pixel luminous body through a scan line and a data line.

4. The head-mounted display according to claim 1, wherein the vertical field of view angle of the head-mounted display is larger than 20°; the vertical field of view angle of the head-mounted display is:when the head-mounted display is worn by normal viewing, its eye observation point(X / Y) is connected to the middle point (Q, S) of the upper edge and the lower edge of the image display surface, and the angle formed by the two connecting lines.

5. The head-mounted display according to claim 1, wherein the horizontal field of view angle of the head-mounted display is larger than 124°.

6. The head-mounted display according to claim 1, wherein the horizontal field of view angle of the head-mounted display is larger than 230°.

7. The head-mounted display according to claim 1, wherein the concave display screen is a concave display screen with the partially internal cylindrical surface, that is, the shape of the image display surface of the concave display screen is a partial area of the internal surface of the cylindrical surface.

8. The head-mounted display according to claim 7, wherein the length of the row pixel display area of the image display surface of the concave display screen with the partially internal cylindrical surface is greater than 2.5 times the length of the column pixel display area.

9. The head-mounted display according to claim 1, wherein the concave display screen is a concave display screen with the partially internal spherical surface, that is, the shape of the image display surface of the said concave display screen is a partial area of the inner surface of the spherical surface; the image display surface of the edge area of the concave display screen with the partially internal spherical surface may not be bent according to the radius of this spherical surface.

10. The head-mounted display according to claim 1, wherein the head-mounted display is a display having a naked-eye 3D function and an image display surface of a display screen is concave.

11. The head-mounted display according to claim 10, wherein the head-mounted display with a naked-eye 3D function and with the image display surface is concave is parallax barrier naked-eye 3D concave head-mounted display or lenticular lens naked-eye 3D concave head-mounted display or naked-eye 3D concave head-mounted display with splitting screen; for the parallax barrier naked-eye 3D concave head-mounted display, there is a layer of suitable parallax barrier (1411) on all or part of the surface of the concave display screen of the head-mounted display; for this type of head-mounted display, by virtue of suitable image video play software and occluded by opaque stripes of the parallax barrier, the left-eye image of the wearer of the head-mounted display is a simulated scene image that should be seen from a left-eye perspective in a real scene, and the right-eye image is a simulated scene image that should be seen from a right-eye perspective in a real scene; for the lenticular lens naked-eye 3D concave head-mounted display, there is a layer of suitable lenticular lens (1411) on all or part of the surface of the concave display screen of the head-mounted display; for this type of head-mounted display, by virtue of suitable image video play software and refraction by the lenticular lens, the left-eye image of the wearer of the head-mounted display is a simulated scene image that should be seen from a left-eye perspective in a real scene, and the right-eye image is a simulated scene image that should be seen from a right-eye perspective in a real scene; the naked-eye 3D concave head-mounted display with splitting screen installs a light baffle between the left and right half screen of concave display screen of said head-mounted display, by a suitable image video playback software, the left eye of the wearer can only see the image displayed on the left half screen, which is a simulated scene image that the left eye should see in a real scene, and the right eye can only see the image displayed on the right half screen, which is a simulated scene image that the right eye should see in a real scene.

12. The head-mounted display according to claim 1, wherein the head-mounted display further comprises a hood (1401) , and the hood (1401) can close the concave display screen of the head-mounted display and the wearer's eyes in a space to hinder the outside light.

13. The head-mounted display according to any one of claims 1 to 12, wherein a circuit board of the head-mounted display is installed with a power line interface, a signal line interface, and a headphone interface.

14. The head-mounted display according to claim 13, wherein the head-mounted display further comprises a scene special effect device for playing motion movies or games with sensory effects; and the scene special effect device comprises: an air tube nozzle (1316) , a high-pressure air-tube nozzle (1318) , an odor tube nozzle, a water mist nozzle or a nozzle swinging device or a pneumatic or electric device (1319) that touches, presses or scratches the wearer's skin; the scene special effect device is installed on the head-mounted display and / or a specified position on the body surface of the wearer of the head-mounted display; when this head-mounted display plays a motion movie or motion game video with a sense effect, the scene special effect device makes the head-mounted display wearer has a feeling of wind blowing, airflow, odor, water mist, collision, pressure, or scratching according to the needs of the film and television scene.

15. The head-mounted display according to claim 13, wherein the head-mounted display also comprises a sensor; the sensor may be connected to a computer to the sensing signal is passed through the computer according to a corresponding program to change the image video content displayed on the head-mounted display; the sensor is mounted in: a fixed part and fixed direction of the head-mounted display, a fixed part and fixed direction of the head-mounted display's wearer or a fixed part and fixed direction of the scene propos; the sensor comprises an acceleration sensor (1313) , a magnetic field sensor, a gyroscope (1314) , a gravity sensor, a photoelectric sensor (1315) , a fingerprint sensor, a face recognition sensor, an iris recognition sensor, an eyeball recognition sensor, an eye tracking sensor, a gesture recognition sensor (1311) , an air pressure sensor, GPS, a temperature sensor, a pulse rate sensor, a blood pressure sensor, a blood oxygen sensor, a sound sensor, or a camera (1312) .

16. The head-mounted display according to any one of claims 1 to 13, wherein the head-mounted display further comprises a computer function module, and the computer function module can be connected to the Internet through its communication unit, and the images and videos in the storage unit of the computer function module or transmitted from the Internet are displayed on the display screen of the head-mounted display.

17. The head-mounted display according to claim 16, wherein the head-mounted display further comprises a mobile communication module; the mobile communication module can be connected to a smart phone mobile communication network and the wearer can display the image and video information sent by other smart terminals used in the mobile communication network through the corresponding operation on the display screen of this head-mounted display.

18. A display screen, a pixel unit of the display screen has an electroluminescent function, and the light emission of the pixel unit is controlled by a scan line and a data line, wherein the interface (802) between the data line electrode and the column driver circuit is in the middle of the data line at the back of the display screen; or the interface between the scan line electrode of the display screen and the row driver circuit is in the middle of the line scan line on the back of the display screen.

19. A method for manufacturing a display screen comprising sequentially spraying the pixel circuit material of the display screen on a substrate (1001) supporting the pixel circuit through an inkjet printer, wherein the substrate (1001) is a transparent rotating body shape, and a suitable In the inkjet printer, by rotating the substrate (1001) of this rotary body shape around its geometric rotation axis, the nozzle (1002) of the inkjet printer is spraying the pixel circuit material on the substrate (1001) according to a set stepping procedure .

20. A method for manufacturing a display screen ,which comprises sequentially printing the pixel circuit material of the display screen on a planar substrate (1101) supporting the pixel circuit through an inkjet printer or a printing device or a printing tool (1102) , wherein the planar substrate (1101) for supporting the pixel circuit of the display screen the sheet is a transparent plastic sheet (1103) , and the printing pattern (AB) of the pixel array is a pixel array pattern required for a concave display screen, which is unfolded into a flat pattern, the transparent plastic sheet (1103) is bent and deformation treatments such as stretching and / or shrinking and / or twisting are fixed to the shape of the desired concave display (1105) .

21. A method for manufacturing a display screen, which comprises sequentially printing the pixel circuit material of the display screen on a plane substrate supporting the pixel circuit through an inkjet printer or a printing device or a printing tool (1202) , wherein the plane used to support the pixel circuit of the display screen the substrate is a cubic transfer film (1201) ;the pixel array pattern (AB) required for the concave display screen, which should be printed on the back of the transparent concave substrate of the concave display screen, is developed into a flat pattern, and the reverse side is printing on the cubic transfer film (1201) ; puting the cubic transfer film (1201) printed on the reverse side of the display circuit of the pixel circuit of the display screen into a liquid (1203) that dissolves only the cubic transfer film (1201) and does not dissolve the material of the pixel circuit of the display screen; after the cubic transfer film (1201) is dissolved, applying a suitable adhesive to the back of the concave display transparent concave substrate (1205) , align the position and pressing the display pixel circuit (AB) on the liquid surface into the liquid (1203) ,the display pixel circuit (AB) is covering on the back of the transparent concave substrate (1205 ) of the concave display.

22. A naked-eye 3D display screen comprising a display screen and a parallax barrier or lenticular lens on the surface of the display screen, wherein the display screen is a flexible display screen (1610) , and the parallax barrier or lenticular lens is suitable for a human eye to view a 3D image video display of the display screen with the naked eye at the distance of distinct vision; this display can be bent into a concave surface through a head-mounted bracket (1601) and fixed on the wearer's head, and the wearer can clearly and correctly view the 3D image displayed on the display screen.

23. A method for manufacturing naked-eye 3D display screen,which comprises sequentially printing the pixel circuit material of the display screen on a planar substrate (1101) supporting the pixel circuit through an inkjet printer or a printing device or a printing tool (1102) , wherein the planar substrate (1101) for supporting the pixel circuit of the display screen the sheet is a transparent plastic sheet (1103) ; after completing the flat printing steps of the pixel circuit required for the display screen, print the appropriate parallax barrier or lenticular lens on the whole or middle of the display surface of the display screen suitable for viewing at a distance of distinct vision, corresponding to the exact position of the column pixel; the pixel array of the display is arranged in a matrix of a normal flat display screen; this can make a bendable naked-eye 3D display screen; this kind of bendable naked-eye 3D display screen can be curved to form a concave surface with a head-mounted bracket and fixed to the head of the wearer, so that the wearer can clearly and correctly view 3D image displayed on the display screen.

24. A method for manufacturing naked-eye 3D concave display screen, which comprises sequentially printing the pixel circuit material of the display screen on a planar substrate (1101) supporting the pixel circuit through an inkjet printer or a printing device or a printing tool (1102), wherein the planar substrate (1101) for supporting the pixel circuit of the display screen the sheet is a transparent plastic sheet (1103) ; the printed pattern of the pixel array is a pattern in which the pixel array pattern required for a concave display is expanded into a flat surface; after the plastic sheet has completed the pixel circuit printing steps required for the display screen, a suitable parallax barrier or lenticular lens is printed on the middle part of the display surface of the display screen, corresponding to the exact position of the pixels in the column; then, the printed substrate is transformed into a desired naked-eye 3D concave display screen shape through a deformation process such as bending and / or stretching and / or shrinking and / or twisting.

25. A 3D image video suitable for display on a head-mounted display comprises two parallax images displayed in front of the left eye and the right eye in the 3D image video, wherein in the two parallax images, only the right region of the image displayed in front of the left eye and the left region of the image displayed in front of the right eye are similar image regions with parallax; the left and right widths of the parallax similar image regions are smaller than or can be adjusted to be smaller than three quarters of the left and right widths of the image displayed in front of the left (or right) eye.

26. The 3D image video suitable for display on a head-mounted display according to claim 25, wherein the left and right widths of the parallax similar image regions are smaller than or can be adjusted to be smaller than the image displayed in front of the left (or right) eye One-half the width of the left and right.

27. A head-mounted bracket, wherein the head-mounted bracket is used to bend a bendable display screen (1610) into a concave surface and fixed to a wearer's head, or the head-mounted bracket is used to fix a concave display screen (101,1301) to the wearer's head, the head-mounted bracket can fix the display screen at a position where the wearer can clearly and correctly view the display image of the display screen, and there is no magnifying glass or reflection between the display screen and the wearer's eyes .

28. The head-mounted bracket according to claim 27, wherein further comprising a light baffle, the light baffle being mounted on the head-mounted stand, separating the left and right half screens of the display screen, so that the left eye of the wearer sees only the image displayed on the left half screen, and the right eye sees only the image displayed on the right half screen.

29. Ahead-mounted display, comprising a display screen (101,1301) and a head-mounted bracket (102,1302) , wherein the display screen is a concave display screen, the image display surface of the concave display screen is concave surface; the pixel of the concave display screen can be controlled by an electric signal to realize electroluminescence; there are two concave display screens on the head-mounted display, or two integrated concave display screens composed of more than two display modules; the head-mounted bracket (102,1302) fixes the two concave display screens on the wearer's head, and fixes the position where the wearer can clearly and correctly view the image displayed on the concave display screen; there is no magnifying glass or reflector between these two concave displays and this wearer's eyes; these two concave display screens can be controlled by software to form an integrated concave display screen (101,1301) , which displays images and videos like one concave display screen (101,1301) ; or the two concave display screens can also display different images and videos at the same time; the left and right concave display screens are separated by a baffle, so that the wearer's left eye can only see the image and video displayed on the left concave display screen and the right eye can only see the image and video shown on the right concave display screen.

30. A method for shooting a panoramic video, comprising mounting a panoramic camera on an object, and shooting the panoramic video when the object rotates in multiple directions, wherein a constant-direction bracket is installing on the object (1705) , and the panoramic camera (1710) is installing on the constant-direction bracket; the constant-direction bracket is used to reduce the shooting direction of each camera of the panoramic camera, relative to the swing of up, down, south, north, east or west directions in the rotating and moving process of the said object.

31. A panoramic video, comprising a panoramic camera is mounted on an object and takes a panoramic video of the said object as it rotates in multiple directions, wherein the panoramic video is displayed on the ordinary plane display through the panoramic video player software, the forward direction of said object in the displayed image rotates relative to the display screen with the rotation of the object in the scene without moving the displayed image by a mouse, keyboard, or gyroscope.
